# EUROPEAN PATENT APPLICATION

(11) **EP 4 125 099 A1**
(43) Date of publication of application: **01.02.2023**
(21) Application number: 21188761.7
(22) Date of filing: 30.07.2021
(51) Int. Cl.: H01B 7/42, B60L 53/18

(54) **A POWER CABLE ASSEMBLY FOR A POWER DISTRIBUTION SYSTEM HAVING AN INTEGRATED COOLING SYSTEM**

(71) Applicant: Aptiv Technologies Limited, St. Michael (BB)
(72) Inventor: PIESZKA-LYSON, Monika, St. Michael (BB); KAWALEC, Dominik, St Michael (BB); KOZAK, Pawel, St Michael (BB); POREBSKI, Grzegorz, St Michael (BB); PALETKO, Grzegorz, St Michael (BB)
(74) Representative: Murgitroyd & Company

(57) **Abstract**

According to arrangements of the specification, there is provided a high voltage power cable assembly comprising an electrically conductive and thermally conductive conductor. The electrical conductor extends longitudinally between first and second end contact surfaces configured for coupling via first and second connectors to electrical connections. The electrical conductor comprises an internal surface and an external surface, wherein the internal surface defines an interior channel configured for receiving a dielectric coolant from a cooling system arranged in communication with the electrical conductor; and wherein the internal surface is an electrically conductive heat transfer surface arranged to be in direct contact with the dielectric coolant for transferring heat from the conducting body to the dielectric coolant.

## Description

### Field

The present application relates in general to high voltage power cables, and more particularly, to a power cable assembly configured for coupling to a cooling system, and a power distribution system incorporating an integrated cooling system.

### Background

Charging of high voltage batteries, for example in the field of automotive technology, requires the use of heavy gauge high voltage, HV, power cables that can handle the level of current required to ensure fast charging. The HV power cables used in battery charging applications and/or power distribution applications are usually provided with a cooling system to ensure that the heat generated at the electrical conductor due to the high current flow is dissipated away, thereby increasing the efficiency and safety of the charging operation.

In one existing approach of the prior art, passive cooling solutions may be applied to reduce the temperature dissipated by a HV power cable. However, passive cooling solutions, are limited due to manufacturing and weight constraints. For example, changing the dimensions of the components, e.g. increase the electrical conductor gauges, to reduce temperature would increase the weight and cost of the power cable assembly, while reducing its flexibility.

Examples of known cable cooling systems are described in KR102120306, and WO201860151. Typically, known power cable assemblies utilize one or more busbars to carry the electrical power and large heat sinks or air cooling units that are designed to dissipate the heat generated during operation at the busbar.

Therefore, there is a need to provide a power cable assembly with an improved cooling system that addresses the above noted problems.

### Summary

It is an aim of the present disclosure to provide an improved power cable assembly and an improved power distribution system that addresses the problems described above.

According to a first aspect, the arrangements of the specification provide:
A high voltage power cable assembly comprising:
an electrical conductor;
a first insulating layer surrounding the electrical conductor;
the electrical conductor extending longitudinally between first and second end contact surfaces configured for coupling via first and second connectors to respective electrical connections;
wherein the electrical conductor comprises an internal surface and an external surface and a conducting body therebetween;
wherein the internal surface defines an interior channel between a first end opening and a second end opening configured for receiving a dielectric coolant from a cooling system arranged in communication with the electrical conductor; and
wherein the internal surface is an electrically conductive heat transfer surface arranged to be in direct contact with the dielectric coolant for transferring heat from the conducting body to the dielectric coolant.

The arrangements of the specification and claims advantageously provide improved heat exchange between the dielectric coolant and the conductor as the coolant is provided in direct contact with the heat transfer surface of the conductor. The improved heat exchange for cooling provides improved conductivity and further that the cross section of the conductor may be decreased in comparison with typical HV conductors, HV busbars or HV cable cross-sections.

In one arrangement the electrical conductor is configured for coupling via first and second connectors to a node of an electrical power supply and a battery respectively.
In one arrangement, the electrical conductor may comprise a tubular or cylindrical form, but may also have other shapes such as square or rectangular. In another arrangement, the electrical conductor may comprise an electrically conductive and thermally conductive busbar. The electrical conductor is comprised of a metal material. The metal may comprise one or more of copper, copper ETP, and/or a copper alloy. The metal may comprise aluminium and/or an aluminium alloy.

In one arrangement the power cable assembly, the first insulating layer may surround or envelop the external surface of the electrical conductor. In a second arrangement the power assembly may further comprise a shielding layer surrounding the first insulating layer, and a second insulating layer external to the shielding layer. The shielding layer may comprise one of braid, pipe, or bundle shielding

The arrangements of specification are advantageously configured for use and operation across a wide range of current loads for example from 100A to 900A, the form, structure and dimensions of the power cable assembly may be adjusted as required for load and to provide the required thermal response levels.

The power cable assembly of arrangements of the specification is configured for coupling to a cooling system. In a further arrangement, for and in operation, the power cable assembly may be coupled to a cooling system.

According to a further aspect there is provided a cooling system configured for coupling with a power cable assembly of arrangements of the specification, the cooling system is configured to circulate the dielectric coolant between a coolant inlet and a coolant outlet, via the interior channel of the electrical conductor, the cooling system comprising:
a pump
a cooling unit, and
one or more connectors for connecting the coolant inlet and the coolant outlet to the power cable assembly; and
   wherein the dielectric coolant is circulated in direct contact with the heat transfer surface of the electrical conductor.

The electrical conductor defines a coolant pipe and the dielectric coolant is receivable in the coolant pipe. In operation the coolant is circulated therethrough. The dielectric coolant is thermally coupled to heat transfer surface of the electrical conductor to provide heat transfer therefrom to the coolant.

The arrangements of the claims advantageously provide an internal and integrated cooling system. Providing an electrical conductor or busbar having an internal channel as the electrical conductor and comprising a heat transfer surface, enables cooling concurrent with operation. Providing concurrent coolant flow allows improved cooling and heat transfer to maintain the high voltage system at the required levels of operating temperature. The provision of power cable assembly operable with an integrated cooling system advantageously allows for increased responsiveness depending on operating conditions, for example coolant flow rate may be adjusted as required.

The dielectric coolant may comprise a dielectric liquid. The dielectric coolant may comprise for example one of the following: (i) 3M Fluorinert FC-43, (ii) 3M Novec 7500; (iii) the coolant comprises transtormer oil. Other suitable dielectric coolants may also be used.

The dielectric coolant may have a withstand voltage level of at least 1.5kV; or at least 6kV. A coolant having a particular different withstand voltage strength may be selected based on operational voltage levels.

The arrangement of the specification provides for the dielectric coolant to be in direct contact with the heat transfer surface of the electrical conductor and as such advantageously provides internal cooling of the conductor without current leakage. Providing a dielectric coolant advantageously avoids current leakage.

The coolant inlet and the coolant outlet may be arranged according to one of the following: the inlet and outlet may be located at opposite ends of the electrical conductor tube; or alternatively the inlet and outlet may be located at the same end of the electrical conductor tube.

According to a further aspect, the arrangements of the specification provide a power distribution system comprising a power cable assembly according to arrangements of the specification and an integrated cooling system according to arrangements of the specification.

In one arrangement the power distribution system comprises a power cable assembly and an integrated cooling system, the power cable assembly comprising:
an electrical conductor, extending longitudinally between first and second end contact surfaces at first and second ends thereof, and configured for coupling via first and second connectors between respective electrical connections;
the electrical conductor comprising an internal surface and an external surface and a conducting body therebetween, and a first insulating layer surrounding the electrical conductor, wherein the internal surface defines an interior channel, between a first end opening and a second end opening, and wherein the internal surface is an electrically conductive heat transfer surface;
the cooling system comprising:
a pump and a cooling unit, wherein a dielectric coolant is circulated through the interior channel of the electrical conductor between a coolant inlet and a coolant outlet via the cooling unit; and
wherein the dielectric coolant is circulated in direct contact with the heat transfer surface of the electrical conductor to provide heat transfer from the electrical conductor to the coolant.

In one arrangement the electrical conductor is configured for coupling via first and second connectors between a node of an electrical power supply and a battery respectively, to provide power for charging the battery.

In one arrangement the system comprises one or more connectors for connecting the coolant inlet and the cooling outlet to the cooling unit. The electrical conductor may comprise an electrically conductive and thermally conductive busbar. The power distribution system provides a first electrical conducting channel and a second closed loop circuit coolant flow channel. The first and second channels being arranged in parallel.

### Brief Description Of The Drawings

The following drawings are provided as an example to explain further and describe various aspects of the present disclosure:
Figure 1 is a perspective view of an exemplary power cable assembly according to embodiments of the present disclosure;
Figures 2 provides a transverse cross-sectional view of the power cable assembly of Figure 1;
Figure 3 is a perspective view of an exemplary power cable assembly according to embodiments of the present disclosure;
Figures 4 provides a transverse cross-sectional view of the power cable assembly of Figure 1;
Figure 5 is an enlarged break-out view of the layers of the power cable assembly of Figures 1 and 2;
Figure 6 s an enlarged break-out of the layers of the power cable assembly of Figures 3 and 4;
Figure 7 is a block diagram illustrating in block diagram form of an exemplary power cable assembly according Figures 1 or 2 coupled to an exemplary cooling system according to embodiments of the present disclosure; and
Figure 8 is a block diagram illustrating an exemplary power distribution system comprising a power cable assembly and an integrated cooling system according to embodiments of the present disclosure.

### Detailed Description Of The Drawings

The following discussion provides many exemplary embodiments of the inventive subject matter. Although each embodiment represents a single combination of inventive elements, the inventive subject matter is considered to include all possible combinations of the disclosed elements. Thus, if one embodiment comprises elements A, B, and C, and a second embodiment comprises elements B and D, then the inventive subject matter is also considered to include other remaining combinations of A, B, C, or D, even if not explicitly disclosed.

For simplicity and clarity of illustration, reference numerals may be repeated among the Figures to indicate corresponding or analogous elements. Numerous details are set forth to provide an understanding of the examples described herein. The examples may be practised without these details. In other instances, well-known methods, procedures, and components are not described in detail to avoid obscuring the examples described. The description is not to be considered as limiting to the scope of the examples described herein.

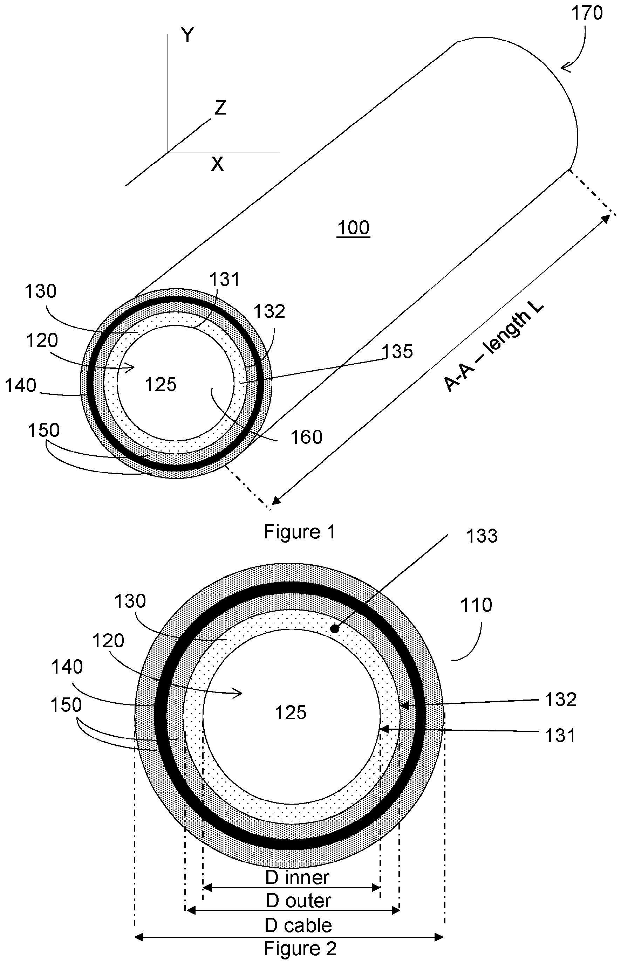

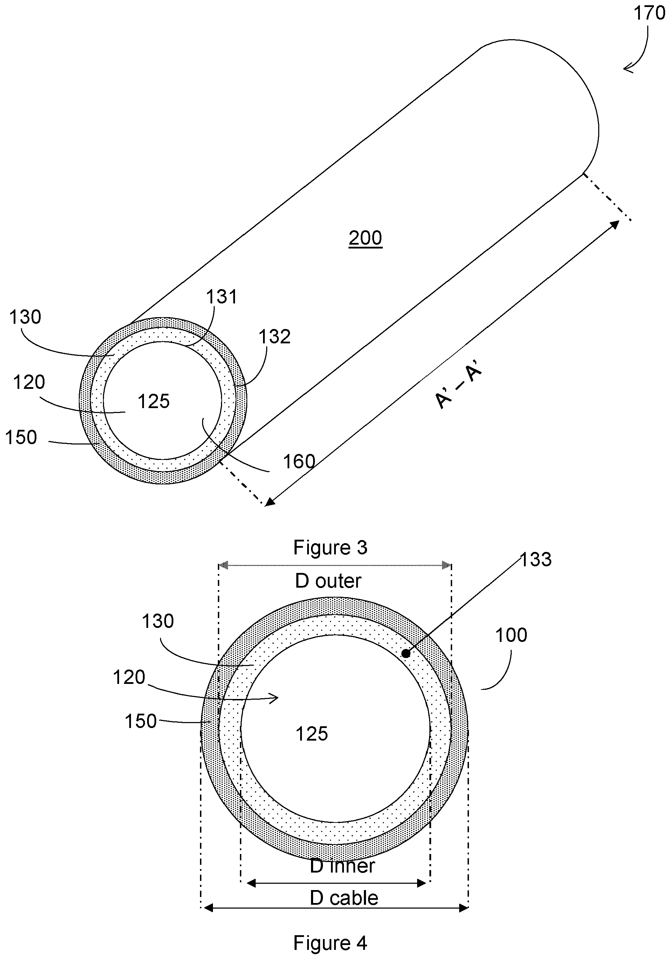

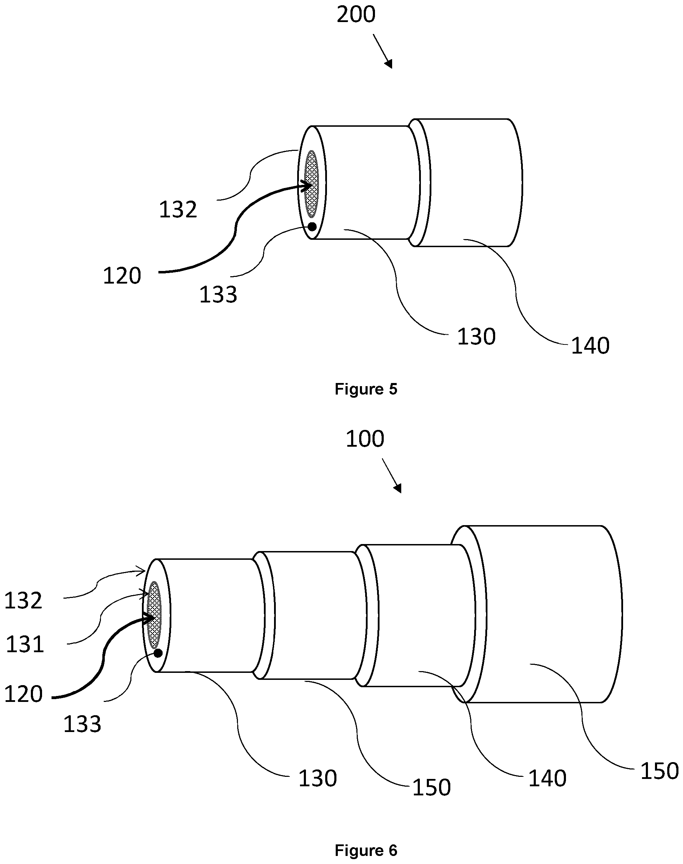

A power cable assembly 100 according to specification is described with reference to the Figures and initially in particular with reference to Figures 1, 2 and 5. With reference to Figures 3, 4 and 6 an alternative exemplary power cable assembly 200 is described. The power cable assemblies 100, 200 include many features in common and common reference numbers have been used where appropriate.

The power cable assembly 100, 200 comprises an electrical conductor 130. The power cable assembly 100 has a longitudinal axis (that extends in the z-direction as illustrated in Fig. 1), between first and second ends thereof. The features of the power cable assembly 100 are arranged about the longitudinal axis thereof.

The power cable assembly 100, 200 comprises an electrical conductor 130. The electrical conductor 130 is both electrically conductive and thermally conductive. The electrical conductor 130 extends longitudinally between a first contact end surface 135 and a second end contact surface 135 at opposing first and second ends of the electrical conductor 130 and of the power cable assembly 100. The contact surfaces 135 are conducting surfaces. The electrical conductor 130 is configured for coupling via first and second connectors to respective electrical connection. For example, the electrical conductor may be configured for coupling via a node of an electrical power supply at a first end and a battery at a second, respectively. The electrical conductor 130 is configured for connecting to a power distribution system.

Accordingly, the power cable assembly 100, 200 may for example be used in applications including for the delivery of power from a power supply to provide charging of a battery of a car. The high voltage power cable assembly 100, 200 may be a flexible cable.

The electrical conductor 130 comprises an internal surface 131 and an external surface 132 and a conducting body 133 extending there between. The internal surface 131 defines an interior channel 120 that extends between a first end opening 160 and a second end opening 170. The interior channel 120 is configured for receiving a coolant from a cooling system 200 arranged in fluid communication with the electrical conductor 130.

The electrical conductor 130 has a tubular or pipe form. The coolant comprises a dielectric coolant 125. The coolant 125 circulates through the interior channel 120, as illustrated in the drawings. The electrical conductor 130 defines a coolant pipe for the dielectric coolant 125 and also defines the electrically conducting body 133. The dielectric coolant is circulated through the interior channel 120 of the electrical conductor 130.

In the exemplary arrangements of Figures 1 to 6 the overall power cable assembly 100, 200 and the electrical conductor 130 have a generally cylindrical form and extend radially about their longitudinal axis. As illustrated, in transverse cross-section (X-Y plane with reference to Figure 1), the power cable assembly 100, 200 and the conductor 130 are generally of circular form or ring form. It will however be appreciated that while the electrical conductor 130 of the exemplary arrangements of the drawings has a generally circular or ring form in cross-section, an electrical conductor of other suitable forms may also be used. The electrical conductor 130 may for example have an oval or square or rectangular form in cross-section. The electrical conductor may be a busbar 130 that is both electrically conductive and thermally conductive, and having a tubular or pipe form defining a coolant pipe. The electrical conductor 130 comprises a single unitary body form.

Referring to the Figures, the electrical conductor 130 of the exemplary power cables 100, 200 has a length L in the longitudinal direction. The interior channel 120 has a diameter dᵢₙ, which together with the radius, and the length of the electrical conductor 130 defines the volume V_{channel} of the interior channel 120, the volume of coolant that can be received therein, and the surface area of the inner channel. The electrical conductor 130 has an inner radius and inner diameter dᵢₙ, and an outer radius and outer diameter dₒᵤₜ. The diameters are shown in Figures 2 and 4. The conducting web or wall of the electrical conductor 130 that extends transversely or radially between the internal and external surfaces defines the electrically conducting body 133. The conducting body has a depth dₒᵤₜ-dᵢₙ. In the case of the exemplary arrangement of Figure 2 (or Figure 4) the depth is a radial distance, the difference between the outer radius and the inner radius of the electrical conductor 130.

The depth or thickness of the conducting body 133 of the electrical conductor 130, the inner and outer diameters and radii, together with the length L defines the volume V_{conductor} of the conducting body 133. The volume, form and dimensions of the electrical conductor 130 and the interior channel 120 may be varied and are selected to provide the required levels of cooling for the power cable assembly. The area of the internal surface 131 of the electrical conductor which defines the heat transfer surface, may also be varied and is selected to provide the required contact area between the dielectric coolant and the heat transfer surface. For example, the form, dimensions and volume of coolant relative to the volume of the conductor body may be selected based on operational requirements, for example taking account of current and operating temperature requirements.

The internal surface 131 of the electrical conductor 130 is a heat transfer surface. The internal surface 131 of the electrical conductor 130 is electrically conductive and heat conducting. The internal surface 131 is arranged to be in direct contact with the dielectric coolant 125, receivable in the interior channel 120, to transfer heat directly from the electrical conductor 130 to the dielectric coolant 125. In operation, heat that is generated in electrical conductor 130 as current passes through the conducting body 133 is transferred via the internal surface 131 to the coolant 125.

The provision of the dielectric coolant 125 in direct contact with the heat transfer surface, the internal surface 131, of the electrical conductor 130 provides for an improved heat transfer from the electrical conductor to the coolant. Therefore, the dielectric coolant 125 is thermally coupled to the electrically conductive heat transfer surface 131 to allow heat transfer from electrical conductor 130 to the coolant 125.

The electrical conductor 130 defines a coolant pipe for the dielectric coolant 125. The dielectric coolant 125 is circulated though the interior channel 120 of the electrical conductor 130 in direct contact with the internal surface 131 of the electrical conductor 130 between the first end opening 160 and the second end opening 170. The electrical conductor 130 is electrically and thermally conductive, and the dielectric coolant 125 is in thermal contact with the heat conducting internal surface 131.

The arrangement of the specification provides the dielectric coolant 125 in direct contact with the heat transfer surface 131 of the conductor 130 and as such provides internal cooling of the conductor 130 without current leakage. Providing the dielectric coolant 125 in direct contact with the conductor 130 advantageously avoids current leakage.

The power cable assembly 100, 200 comprises a high voltage, HV, power cable. The power cable assembly 100, 200 is configured for delivery of high current loads. The electrical conductor 130 or the electrical conductor 130 is a high voltage, HV, conductor.

In further detail, the electrical conductor 130 is comprised of a metal material. The metal may comprise for example: copper, copper ETP (electrolytic tough-pitch copper), or a copper alloy. In an alternative arrangement the metal may comprise aluminium or an aluminium alloy. However, it will be appreciated that other suitable alternative materials may be used.

The power cable assembly 100 of Figs. 1, 2 and 5 comprises first and second layers (150) of insulation and a shielding layer 140 therebetween. In this regard, the power cable assembly 100 comprises:
(i) a first insulating layer 150 surrounding the external surface 132 of the conductor 130;
(ii) a shielding layer 140 surrounding the first insulating layer 150;
(iii) a second insulating layer 150 external to the shielding layer 140.

In an alternative embodiment, the power cable 200 of Figures 3, 4 and 6 comprises a first insulating layer 150 surrounding the external surface 132 of the electrical conductor 130.

The insulation material may for example be PA11, PA12 or XLPO or silicone. However, it will be appreciated that any suitable insulation material may be used.

The shielding 140 may for example be braid, pipe, or bundle shielding. However, it will be appreciated that any suitable alternative shielding may be used.

The specification provides a power cable assembly 100 that is shielded and a power cable assembly 200 that is unshielded. The power cable assembly 100 or 200 is selected including based on current load. The power cable assembly operable with the integrated cooling system provides an improved temperature response and thermal behaviour at all current levels, for the respective cable types. The arrangement of the specification allows for the operating temperature to be maintained at desired levels.

The coolant 125 has dielectric properties and accordingly is configured to be used and circulated in direct contact with the electrical conductor 130 to be cooled. The dielectric coolant 125 comprises a dielectric liquid. In a preferred arrangement, the dielectric coolant is a fully dielectric liquid. In preferred arrangements of the specification, the dielectric coolant may comprise, for example, one of the following:
(i) 3M Fluorinert FC-43 or
(ii) 3M Novec 7500
(iii) the coolant may comprise a transtormer oil;
(iv) other liquid coolant with dielectric properties

However, it will be appreciated that the above dielectric coolants are provided as examples of suitable dielectric coolants for use in the arrangement of the specification, and that other suitable coolants may also be used.

The withstand voltage level of the dielectric coolant 125 may be at least 1.5kV or in an alternative arrangement 6kV. The withstand voltage level will be selected taking account of the voltage being used in the power cable assembly, this allows selection of an appropriate dielectric material.

The dielectric coolant 125 may be selected according properties of the coolant and requirements and applications.

For example, a coolant having the following properties may be selected for applications of the exemplary arrangements of the present specification.
- Boiling point >100degC
- Liquid density - preferable <2000kg/m3
- Viscosity <1 00cSt @ 20degC)

The specification provides cooling arrangements for a power cable assembly 100, 200. The cooling arrangement comprises a dielectric coolant 125 that is configured to be received directly in contact with a heat transfer surface 131 of an electrical conductor 130. The dielectric coolant 125 is circulated by a cooling system 300 in direct contact with the conductor 130.

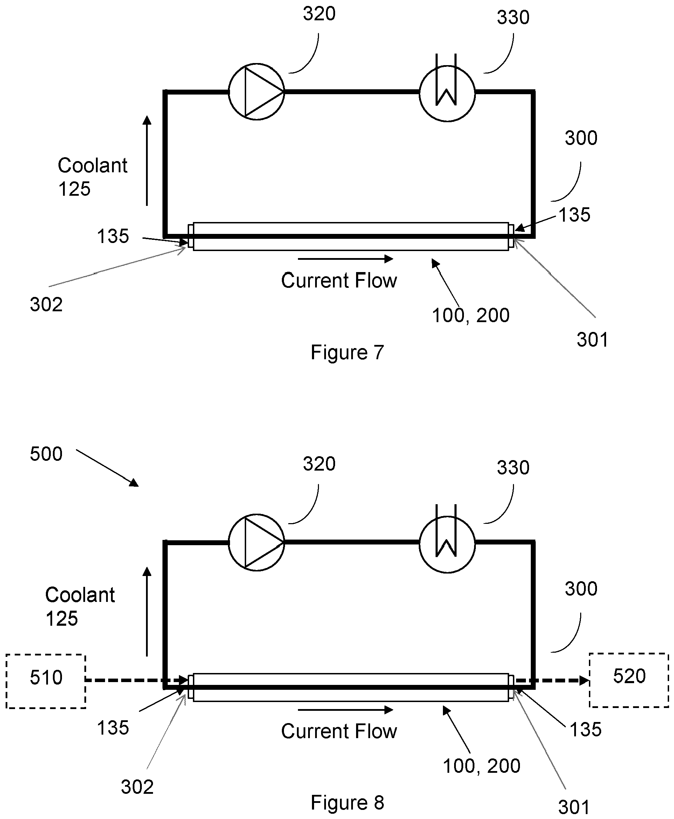

Referring to Figures 7 and 8, an exemplary power distribution system 500 comprising the power cable assembly 100, 200 and an integrated cooling system 300 is described. The power cable assembly 100, 200 is coupled to the cooling system 300.

The cooling system 300 of figures 7 and 8 comprises a pump 320 and a cooling unit 330. The power cable assembly 100, 200 is configured for connection to the cooling system 300. The coolant inlet 301 and the coolant outlet 302 are configured for connection using one or more connectors to the power cable assembly

In operation, the coolant, dielectric coolant 125, is circulated through the interior channel 120 of the conductor 130 of the power cable assembly, between a coolant inlet 301 and a coolant outlet 302.

In the exemplary arrangement of Figure 7, the coolant inlet 301 and coolant outlet 302 are located at opposite ends of the power cable assembly 100. It will however, be appreciated that in an alternative arrangement the inlet 301 and outlet 302 may be located at the same end, the first end of the power cable assembly - in such an arrangement a U-bend or connector or other coolant flow return feature would be provided at the second end of the power cable assembly.

The cooling system 300 comprises a closed loop coolant circulation system. The coolant 125 is circulated by the pump 320 through the interior channel 120 of the electrical conductor 130, between the inlet 301 and outlet 302 and via the cooling unit 330. The dielectric coolant 125 is circulated in direct contact with the conductor 130. The cooling system 300 is configured for coupling to the coolant inlet 301 and the coolant outlet 302 using one or more connectors.

The power distribution system 500 comprises an integrated cooling system 300. The arrangement defines an internal cooling system. The power cable assembly is connectable to a cooling system and operable with an integrated cooling system.

In an exemplary arrangement, the power distribution system and the power cable assembly are configured for connection between a power supply 510 and a battery 520. As described above the first and second end contact surfaces 135 of the conductor 130 of the power cable are configured for coupling via first and second connectors to a node of an electrical power supply at a first end and a battery at a second end, respectively. The contact surfaces 135 of the electrical conductor 130 are the conducting end surfaces at the first and second ends of the power cable assembly. Similarly, the interior channel 120 through which the coolant 125 is circulated, is configured for coupling to the cooling system 300 via one or more connectors. The coolant inlet 301 and outlet 302 are thus coupled to the cooling unit 330 and pump 320 and to the power cable assembly.

The power distribution system 500 in effect comprises an electrical conducting channel and a coolant flow or circulation channel, arranged in parallel.

Typically, high voltage conductors may experience high operating temperatures. For example, XLPO cables are designed for temperature level up to 150°C and Silicone ones even up to 180°C.

During operation of the power distribution system 500, as current flows through the power cable assembly 100, the electrical conductor 130, heat will be generated.
The dielectric coolant 125 is circulated through the conductor 130, to absorb heat therefrom by heat transfer to the dielectric coolant. The circulation of the dielectric coolant 125 in direct contact with the conductor 130 advantageously avoids current leakage and provides for an improved heat transfer from the conductor 130 to the coolant 125 and an improved cooling.

The power distribution system 500 with integrated cooling system according to the specification allows in exemplary arrangements for operating temperature rise (temperature above ambient temperature) to be maintained in the range of < 50 K Dependent on conductor cross section, different current loads may be applied to reach Tᵣᵢₛₑ<50K.

### Example 1

In an exemplary arrangement, according to the specification, a busbar 130 or electrical conductor 130 has a cross-sectional area of 35mm². The power cable assembly has an outer diameter d_{cable} of 19.1 mm with shielding (or an outer diameter d_{cable} of 14.5 mm without shielding). The interior channel 120 has a diameter of 10 mm and a flow rate of coolant of 1.5l/min is provided. In these exemplary arrangements, current carrying capability may for example be 800-900A (Tᵣᵢₛₑ <50K).

The electrical conductor of the example may have - radial extent/thickness in the range of 10mm² to 95 mm².

According to the specification there is provided a power distribution system 500 comprising a power cable assembly 100, 200 and an integrated cooling system 300, the power cable assembly comprises:
an electrically conductive and thermally conductive electrical conductor130 comprising:
   the electrical conductor 130 extending longitudinally between first and second end contact surfaces 135;
   the electrical conductor 130 comprising an internal surface 131 and an external surface 132 and a conducting body 133 therebetween, wherein the internal surface 131 defines an interior channel 120, between a first end opening 160 and a second end opening 170, and wherein the internal surface 131 is an electrically conductive heat transfer surface;
the cooling system comprising a coolant 125, a pump 320 and a cooling unit 330, wherein the coolant is circulated through the interior channel 120 of the electrical conductor130 between a coolant inlet 301 and outlet 302 via the cooling unit 330; and
wherein the coolant comprises a dielectric coolant 125 thermally coupled to the electrically conductive heat transfer surface to provide heat transfer from the electrical conductor130 to the coolant.

The system further comprising one or more connectors for connecting the coolant inlet and outlet to the power cable assembly. The electrical conductor may be an electrically conductive and thermally conductive busbar. The power distribution system provides a first electrical conducting channel and a second closed loop circuit coolant flow channel. The first and second channels being arranged in parallel.

The specification provides power cable assembly arrangements and power distribution system arrangement comprising a power cable assembly and integrated cooling system which advantageously provide improved cooling and improved heat transfer from a conductor to a coolant to provide improved operation.

Advantageously, the coolant is provided in direct contact with the conductor. Improved heat exchange is provided between the dielectric coolant and the conductor as the coolant is provided in direct contact with the heat transfer surface of the conductor. Further, the conductor of the power cable assembly has a single unitary body form to which effective cooling is provided. This is advantageous in comparison with previous arrangements that provided the conductor as separate insulated conducting wires. The improved heat exchange and cooling provides improved conductivity. Further the cross section of the conductor may be decreased in comparison with typical HV conductor or HV busbar, or HV cable cross-sections.
The cross-section of the conductor of the arrangement of the claims may be decreased 3-5 times in comparison with typical HV busbar/conductor/cable. For example a typical copper cable with conductor cross section of close to 120 mm², which may be replaced by a cooled conductor having a cross section of approximately 35 mm².

The arrangements of the specification provide solutions to the problems associated with large amounts of heat generated on a typical power distribution or cable charging system, including for example a harness or a high voltage power assembly, during charging of an electric vehicle. Providing an electrical conductor having an internal channel as the electrical conductor, as described and defined in the claims, enables concurrent coolant flow to provide improved cooling and heat transfer to maintain the high voltage system at the required safe levels of operating temperature.

While the power distribution system 500 and power cable assemblies 100, 200 of the present disclosure have been described in terms of the preferred embodiments thereof, it is not intended to be so limited, but rather only to the extent set forth in the claims that follow.

## Claims

1. A high voltage power cable assembly (100, 200) comprising:
an electrical conductor (130);
a first insulating layer (150) surrounding the electrical conductor (130);
the electrical conductor (130) extending longitudinally between first and second end contact surfaces (135) configured for coupling via first and second connectors to respective electrical connections;
wherein the electrical conductor (130) comprises an internal surface (131) and an external surface (132) and a conducting body (133) therebetween;
wherein the internal surface (131) defines an interior channel (120) between a first end opening (160) and a second end opening (170) configured for receiving a dielectric coolant (125) from a cooling system (300) arranged in communication with the conductor (130); and
wherein the internal surface (131) is a heat transfer surface arranged to be in direct contact with the dielectric coolant (125) for transferring heat from the conducting body (133) to the dielectric coolant (125).

2. The power cable assembly (100, 200) of claim 1 wherein the electrical conductor (130) is of a tubular or cylindrical form.

3. The power cable assembly (100, 200) of claim 1 or 2, wherein the electrical conductor (130) comprises a busbar.

4. The power cable assembly (100, 200) of any preceding claim, wherein the electrical conductor (130) is comprised of a metal material.

5. The power cable assembly (100, 200) of claim 4, wherein the metal material comprises one or more of the following:
(i) copper, copper ETP, and/or a copper alloy;
(ii) aluminium, and/or an aluminium alloy.

6. The power cable assembly (100, 200) of any preceding claim, wherein the first insulating layer (150) envelops the external surface (132) of the electrical conductor (130).

7. The power cable assembly (100, 200) of any of claims 1 to 5, further comprising:
(i) a shielding layer (140) surrounding the first insulating layer (150); and
(ii) a second insulating layer (150) external to the shielding layer 140.

8. The power cable assembly of claim 7, wherein the shielding layer (140) comprises one of braid, pipe, or bundle shielding.

9. A cooling system (300) configured for coupling with a power cable assembly (100, 200) of any of claims 1 to 8, the cooling system configured to circulate a coolant between a coolant inlet (301) and a coolant outlet (302), via the interior channel (120) of the electrical conductor (130), the cooling system comprising:
a pump (320);
a cooling unit (330); and
one or more connectors for connecting the coolant inlet (301) and the coolant outlet (302) to the power cable assembly (100, 200); wherein the coolant comprises a dielectric coolant (125) circulated in direct contact with the heat transfer surface (131) of the electrical conductor (130).

10. The cooling system (300) of claim 9, wherein the dielectric coolant (125) is thermally coupled to the heat transfer surface (131) of the power cable assembly (100, 200) to provide heat transfer therefrom to the coolant.

11. The cooling system of claim 9 or 10, wherein the dielectric coolant (125) comprises a dielectric liquid.

12. The cooling system of any of claims 9 to 11, wherein the dielectric coolant comprises one of the following:
(i) 3M Fluorinert FC-43,
(ii) 3M Novec 7500,
(iii) wherein the coolant comprises transformer oil.

13. The cooling system of any of claims 8 to 11, wherein the dielectric coolant (125) has a withstand voltage level of one of the following:
(i) at least 1.5kV;
(ii) at least 6kV.

14. The cooling system of any of claims 9 to 13, wherein the coolant inlet (301) and coolant outlet (302) are arranged according to one of the following:
(i) wherein the coolant inlet (301) and coolant outlet (302) are located at opposite ends of the electrical conductor (130).
(ii) wherein the coolant inlet (301) and coolant outlet (302) are located at the same end of the electrical conductor (130).

15. A power distribution system (500) comprising a power cable assembly (100, 200) according to any of claims 1-8 extending between first and second end contact surfaces (135) configured for coupling, via first and second connectors, to respective electrical connections (510, 520) of the power distribution system (500) and an integrated cooling system (300) according to any of claims 9-14 coupled to the power cable assembly (100) for circulating the dielectric coolant (125) between the coolant inlet (301) and coolant outlet (302) of the interior channel (120) of the electrical conductor (130).
